# EUROPÄISCHE PATENTANMELDUNG

(11) **EP 2 608 393 A1**
(43) Veröffentlichungstag der Anmeldung: **26.06.2013**
(21) Anmeldenummer: 11194198.5
(22) Anmeldetag: 19.12.2011
(51) Int. Cl.: H02M 7/49

(54) **Stromrichterschaltung**

(71) Anmelder: Siemens Aktiengesellschaft, 80333 München (DE)
(72) Erfinder: Hiller, Marc, Dr., 91207 Lauf an der Pegnitz (DE)

(57) **Zusammenfassung**

Eine verbesserte Stromrichterschaltung (4) für den Fahrantrieb eines Elektro-Fahrzeugs umfasst wenigstens zwei Submodule (11) in Reihenschaltung, wobei die Stromrichterschaltung (4) über eine Induktivität (10) elektrische Leistung aus einer eine Gleichspannung (Ub) abgebenden Leistungsquelle (5) bezieht. Jedes Submodul (11) weist eingangsseitig eine einphasige Halbbrücke (20) und lastseitig eine einphasige Vollbrücke (21) auf, wobei die Halbbrücke (20) und die Vollbrücke (21) gleichspannungsseitig zusammen mit einem Zwischenkreiskondensator (22) parallel zueinander in einen Zwischenkreis (25) geschaltet sind. Zur Speicherung oder Zuführung von elektrischer Energie weist die Stromrichterschaltung (4) in einer ersten Variante zusätzlich zu den Submodulen (11) mindestens ein Versorgungsmodul (50a,50b) auf, das eingangsseitig eine einphasige Halbbrücke (20) aufweist, der gleichspannungsseitig über einen Zwischenkreis (25) ein Zwischenkreiskondensator (11) sowie ein weiterer Stromrichter (40,51) parallelgeschaltet sind, wobei an den weiteren Stromrichter (40,51) eine zusätzliche elektrische Leistungsquelle (46,52) angeschlossen oder anschließbar ist. In einer zweiten Variante der Stromrichterschaltung (4) weist mindestens eines der Submodule (11) einen weiteren Stromrichter (40) auf, der parallel zu der Vollbrücke (21) in den Zwischenkreis (25) geschaltet ist, und an den eine zusätzliche elektrische Leistungsquelle (46) angeschlossen oder anschließbar ist.

## Beschreibung

Die Erfindung betrifft eine Stromrichterschaltung gemäß dem Oberbegriff des Anspruchs 1 sowie einen Fahrzeugantrieb mit einer solchen Stromrichterschaltung.

Eine Stromrichterschaltung zur elektrischen Energieversorgung der Motorwicklungen eines Elektromotors in einem Fahrzeugantrieb ist beispielsweise aus der Veröffentlichung Lukas Lamberts et al., "Modularer Hochfrequenz Umrichter für Fahrzeugantriebe", EMA 2010, 08. bis 09. September 2010, Aschaffenburg bekannt.

Der bekannte Modulare Hochfrequenz-Umrichter (kurz MHF-Umrichter) ist zum Umwandeln einer Gleichspannung aus einer elektrischen Leistungsquelle in mehrere Wechselspannungen vorgesehen. Die einzelnen Wechselspannungen werden dabei durch in Reihe geschaltete Submodule erzeugt, an denen eingangsseitig jeweils ein Teil der Gleichspannung abfällt. Submodulintern wird der entsprechende Teil der Gleichspannung jeweils über eine als Wechselrichter arbeitende einphasige Vollbrücke in eine Wechselspannung umgewandelt, die an eine der Motorwicklungen abgegeben werden kann. Die einphasige Vollbrücke umfasst zwei einphasige Halbbrücken, die jeweils zur Erzeugung einer Wechselspannungsphase vorgesehen sind, so dass die beiden Wechselspannungsphasen in Summe eine einphasige Wechselspannung ergeben.

Die an den Eingängen der einzelnen Submodule abfallenden Teilspannungen werden vor der Wechselrichtung mittels eines Hochsetzstellers erhöht. Der Hochsetzsteller umfasst eine Induktivität, die in Reihe zwischen der elektrischen Leistungsquelle und der Reihenschaltung der Vollbrücken verschaltet ist, sowie eine Eingangshalbbrücke in jedem Submodul. Die Vollbrücke und die Halbbrücke sind submodulintern gleichspannungsseitig verschaltet.

Parallel zur Vollbrücke und zur Eingangshalbbrücke ist in jedem Submodul ein Zwischenkreiskondensator verschaltet.

Der MHF-Umrichter hat gegenüber klassischen Umrichtertopologien insbesondere den Vorteil, dass er infolge kleiner Spannungen pro Submodul mit entsprechend klein dimensionierten Bauteilen, und somit besonders kompakt, leicht (d.h. mit geringem Gewicht) und unaufwändig aufbaubar ist. Er hat jedoch im Gegensatz zu einem herkömmlichen Zwischenkreis-Umrichter den Nachteil, dass er nur in stark begrenztem Umfang zur kurzfristigen Speicherung von elektrischer Energie, beispielsweise der beim Bremsen durch generatorischen Betrieb des Elektromotors rekuperierten Energie, geeignet ist, zumal die in den Submodulen eingesetzten Zwischenkreiskondensatoren nur eine geringe Kapazität haben.

Ferner bietet der bekannte MHF-Umrichter keine Möglichkeit zum Anschluss von weiteren, extern gespeisten Leistungsquellen, wie beispielsweise Netzteilen.

Der Erfindung liegt die Aufgabe zugrunde, eine diesbezüglich verbesserte Stromrichterschaltung und einen diesbezüglich verbesserten Fahrzeugantrieb anzugeben.

Bezüglich der Stromrichterschaltung wird die Aufgabe erfindungsgemäß gelöst durch die Merkmale des Anspruchs 1. Bezüglich des Fahrzeugantriebs wird die Aufgabe erfindungsgemäß gelöst durch die Merkmale des Anspruchs 7. Vorteilhafte Ausgestaltungsformen und Weiterbildungen der Erfindung sind Gegenstand der abhängigen Ansprüche.

Die Stromrichterschaltung umfasst danach wenigstens zwei Submodule in Reihenschaltung, wobei die Stromrichterschaltung, und damit deren Submodule über eine Induktivität elektrische Leistung aus einer eine Gleichspannung abgebenden Leistungsquelle beziehen. Jedes Submodul weist eingangsseitig eine einphasige Halbbrücke und lastseitig eine einphasige Vollbrücke auf. Die Halbbrücke und die Vollbrücke sind dabei gleichspannungsseitig parallel zueinander in einen Zwischenkreis geschaltet. Parallel zu der Halbbrücke und der Vollbrücke ist in den Zwischenkreis ferner ein Zwischenkreiskondensator geschaltet.

Gemäß einer ersten Variante der erfindungsgemäßen Stromrichterschaltung umfasst diese zusätzlich zu den vorstehend beschriebenen Submodulen mindestens ein zusätzliches Versorgungsmodul, das zur Speicherung oder Zuführung von elektrischer Energie dient. Dieses Versorgungsmodul weist - wie die gewöhnlichen Submodule - eingangsseitig eine einphasige Halbbrücke auf, der innerhalb des Moduls gleichspannungsseitig über einen Zwischenkreis ein Zwischenkreiskondensator parallelgeschaltet ist. Anstelle der bei den gewöhnlichen Submodulen vorgesehenen Vollbrücke, und somit in Parallelschaltung zu der eingangsseitigen Halbbrücke und dem Zwischenkreiskondensator, umfasst das Versorgungsmodul allerdings einen weiteren Stromrichter, an den eine zusätzliche elektrische Leistungsquelle angeschlossen oder zumindest anschließbar ist.

Das Versorgungsmodul ist innerhalb der Stromrichterschaltung vorzugsweise in Parallelschaltung zu einem oder mehreren Submodulen angeordnet. Insbesondere umfasst die Stromrichterschaltung in einem eigenen, zu der Reihenschaltung der Submodule parallelen Versorgungszweig mehrere gleich- oder verschiedenartige Versorgungsmodule, die ihrerseits zueinander in Reihe geschaltet sind. Grundsätzlich kann im Rahmen der Erfindung aber auch mindestens ein Versorgungsmodul in Reihe mit den Submodulen geschaltet sein.

Während bei der vorstehend beschriebenen Erfindungsvariante zum Anschluss der zusätzlichen Leistungsquelle ein gesondertes Versorgungsmodul vorgesehen ist, das insbesondere selbst keine Last speist, ist gemäß einer zweiten Variante der Erfindung mindestens eines der - zur Versorgung einer Last vorgesehenen - Submodule der Stromrichterschaltung dahingehend erweitert, dass an dieses Submodul eine zusätzliche elektrische Leistungsquelle angeschlossen oder anschließbar ist.

Dieses erweiterte Submodul weist zum Anschluss der zusätzlichen Leistungsquelle einen weiteren Stromrichter auf, der parallel zu der Vollbrücke in den Zwischenkreis geschaltet ist. Grundsätzlich ist im Rahmen der Erfindung denkbar, dass nur eine Untergruppe der insgesamt vorhandenen Submodule, insbesondere nur ein einzelnes von mehreren Submodulen, mit dem vorstehend beschriebenen weiteren Stromrichter zum Anschluss der zusätzlichen Energiequelle ausgestattet ist. Zur Herstellung symmetrischer Verhältnisse sind aber vorzugsweise alle Submodule der Stromrichterschaltung identisch aufgebaut, und somit gegebenenfalls auch mit dem weiteren Stromrichter ausgestattet.

In einer bevorzugten Ausführungsform der Stromrichterschaltung handelt es sich bei der zusätzlichen Leistungsquelle um einen Energiespeicher, mithin also um eine "intern gespeiste Leistungsquelle", die die von ihr abgegebene Energie zuvor aus der Stromrichterschaltung selbst bezogen hat. Als Energiespeicher finden dabei vorzugsweise sogenannte Superkondensatoren (Supercaps), insbesondere in Form von Doppelschichtkondensatoren, Pseudokondensatoren oder Hybridkondensatoren Einsatz. Aufgrund der niedrigen Spannungsfestigkeit dieser Bauteile werden meist mehrere dieser Kondensatoren in Reihenschaltung eingesetzt. Ferner kann im Rahmen der Erfindung als Energiespeicher aber auch eine Zusatzbatterie verwendet werden. Der Einsatz von Sub- bzw. Versorgungsmodulen mit einem derartigen Energiespeicher ist insbesondere vorteilhaft, um rekuperierte Antriebsenergie effektiv in der Stromrichterschaltung zwischenspeichern zu können. Der Einsatz von zusätzlichen Energiespeichern ist des Weiteren vorteilhaft, um die für Lastspitzen kurzfristig benötigte Leistung schnell und effektiv zur Verfügung stellen zu können.

Alternativ hierzu kann es sich bei der zusätzlichen Leistungsquelle aber auch um eine "extern gespeiste Leistungsquelle" handeln, das heißt um eine Leistungsquelle, die die von ihr abgegebene Energie auf anderem Wege als durch die Stromrichterschaltung selbst erhält. Beispiele für eine solche "extern gespeiste Leistungsquelle" sind insbesondere ein elektrisches Versorgungsnetz oder ein daran angeschlossenes Netzteil, eine (fahrzeuginterne oder fahrzeugexterne) Photovoltaik-Einheit, eine Brennstoffzelle oder ein Generator.

Sofern es sich bei der zusätzlichen Leistungsquelle um einen Energiespeicher handelt, ist der dieser Leistungsquelle vorgeschaltete weitere Stromrichter in einfacher und effektiver Ausführung vorzugsweise durch eine Halbbrücke gebildet. Der Energiespeicher ist hierbei zweckmäßigerweise einem der beiden Schalter der Halbbrücke parallel geschaltet. Die Halbbrücke wird zweckmäßigerweise als Zwei-Quadranten-Steller betrieben, so dass mittels der Halbbrücke sowohl ein Stromfluss aus dem Zwischenkreis auf den Energiespeicher als auch ein entgegengesetzter Stromfluss aus dem Energiespeicher in den Zwischenkreis erzeugt werden kann.

Sofern es sich bei der zusätzlichen Leistungsquelle um eine extern gespeiste Leistungsquelle handelt, ist der vorgeschaltete weitere Stromrichter an die von der Leistungsquelle gelieferte Stromart angepasst, und ist demnach - je nach der Art der angeschlossenen oder anzuschließenden Leistungsquelle - unterschiedlich ausgeführt. So ist der weitere Stromrichter als Gleichstrom-Umrichter ausgebildet, wenn es sich bei der zusätzlichen Leistungsquelle um eine - gleichstromliefernde - Photovoltaik-Einheit oder Brennstoffzelle handelt. Sofern die zusätzliche Leistungsquelle andernfalls Wechselstrom liefert, wird als weiterer Stromrichter zweckmäßigerweise ein (aktiv steuerbarer) Gleichrichter herangezogen.

In einer zweckmäßigen und kompakten Ausführungsform ist die zusätzliche Leistungsquelle in das Sub- bzw. Versorgungsmodul integriert. Dies ist insbesondere dann sinnvoll, wenn die zusätzliche Leistungsquelle selbst eine kompakte Größe aufweist, insbesondere wenn die Leistungsquelle durch einen Superkondensator oder durch ein Schaltnetzteil gebildet ist. Alternativ kann im Rahmen der Erfindung die zusätzliche Leistungsquelle aber auch separat und gegebenenfalls räumlich getrennt von dem Sub- oder Versorgungsmodul angeordnet sein. Eine räumliche Trennung der zusätzlichen Leistungsquelle von dem Versorgungsmodul ist beispielsweise regelmäßig sinnvoll, wenn es sich bei der zusätzlichen Leistungsquelle um eine Photovoltaik-Einheit handelt.

Der erfindungsgemäße Fahrzeugantrieb umfasst mindestens einen Elektromotor zum Antrieb mindestens eines Fahrzeug-Rades. Der Fahrzeugantrieb umfasst des Weiteren die vorstehend beschriebene erfindungsgemäße Stromrichterschaltung. Die Submodule der Stromrichterschaltung sind hierbei lastseitig mit jeweils einer Phase des mindestens einen Elektromotors verschaltet.

Nachfolgend werden Ausführungsbeispiele der Erfindung anhand einer Zeichnung näher erläutert. Darin zeigen:
- FIG 1: in einem schematisch vereinfachten Schaltbild einen Fahrzeugantrieb mit einem Elektromotor zur Ansteuerung mindestens eines Rades eines Elektro-Fahrzeugs sowie mit einer modularen Stromrichterschaltung, wobei die Stromrichterschaltung drei jeweils einen zusätzlichen Energiespeicher enthaltende Submodule zur Ansteuerung jeweils einer Motorphase des Elektromotors umfasst,
- FIG 2: in einem Schaltbild ein beliebiges Submodul der Stromrichterschaltung gemäß FIG 1,
- FIG 3: in Darstellung gemäß FIG 1 eine alternative Ausführungsform des Fahrzeugantriebs, bei dem die Stromrichterschaltung drei in Reihe geschaltete Submodule zur Versorgung jeweils einer Motorphase des Elektromotors sowie drei ihrerseits in Reihe geschaltete, aber zu den Submodulen parallel geschaltete Versorgungsmodule zur Speicherung und Zuführung von Energie umfasst,
- FIG 4: in Darstellung gemäß FIG 2 ein Versorgungsmodul der Stromrichterschaltung gemäß FIG 3, das einen Energiespeicher umfasst, und
- FIG 5: in Darstellung gemäß FIG 2 ein weiteres Versorgungsmodul der Stromrichterschaltung gemäß FIG 3, das den Anschluss einer extern gespeisten Stromquelle, insbesondere eines Photovoltaik-Elements, einer Brennstoffzelle, eines elektrischen Versorgungsnetzes oder eines Netzteils ermöglicht.

Einander entsprechende Teile und Größen sind in allen Figuren stets mit gleichen Bezugszeichen versehen.

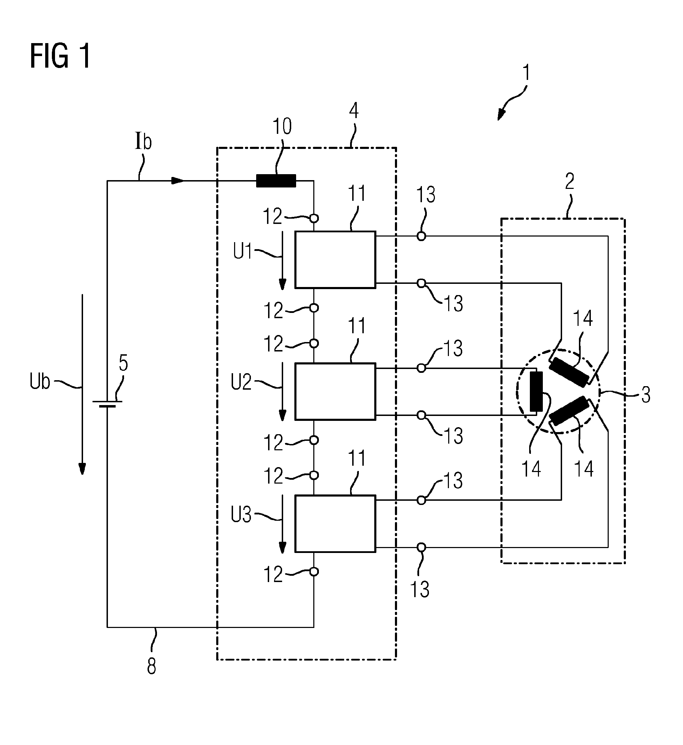

In FIG 1 ist in grober schematischer Vereinfachung ein Fahrzeugantrieb 1 für ein (nicht näher dargestelltes) Elektro-Fahrzeug dargestellt. Der Fahrzeugantrieb 1 umfasst einen elektrischen Verbraucher 2, der einen oder mehrere die Räder des Fahrzeugs antreibende Elektromotoren umfasst. In der praktischen Anwendung wird der Verbraucher 2 beispielsweise durch vier Elektromotoren gebildet, von denen jeweils einer einem Rad des Fahrzeugs zugeordnet ist. Im Beispiel gemäß FIG 1 ist aus Vereinfachungsgründen allerdings lediglich ein (hier dreiphasiger) Elektromotor 3 dargestellt.

Der Fahrzeugantrieb 1 umfasst des Weiteren eine Stromrichterschaltung 4, die den Verbraucher 2 (hier also den Elektromotor 3) mit elektrischer Leistung aus einer elektrischen Leistungsquelle versorgt. Bei der Leistungsquelle handelt es sich in dem dargestellten Beispiel um eine (Fahrzeug-)Batterie 5. Die Batterie 5 legt an die Stromrichterschaltung 4 über einen Batteriestromkreis 8 eine Batteriespannung Ub an und gibt an die Stromrichterschaltung 4 einen Batteriestrom mit einer Batteriestromstärke Ib ab.

Die Stromrichterschaltung 4 weist eingangsseitig eine Induktivität 10 auf, die schaltungstechnisch insbesondere durch eine Spule realisiert ist. An diese Induktivität 10 schließt sich eine Reihenschaltung aus drei Submodulen 11 an. Jedes Submodul 11 ist mit zwei Eingangsklemmen 12 in den Batteriestromkreis 8 geschaltet. Zwischen den Eingangsklemmen 12 eines jeden der Submodule 11 fällt hierbei jeweils eine Teilspannung Ui (i=1,2,3) ab.

Lastseitig ist jedes der Submodule 11 jeweils über zwei Ausgangsklemmen 13 an eine jeweils zugeordnete Phase 14, d.h. einen Wicklungsstrang des Elektromotors 3 angeschlossen. Basierend auf den Teilspannungen Ui versorgen die Submodule 11 den Elektromotor 3 mit elektrischer Energie.

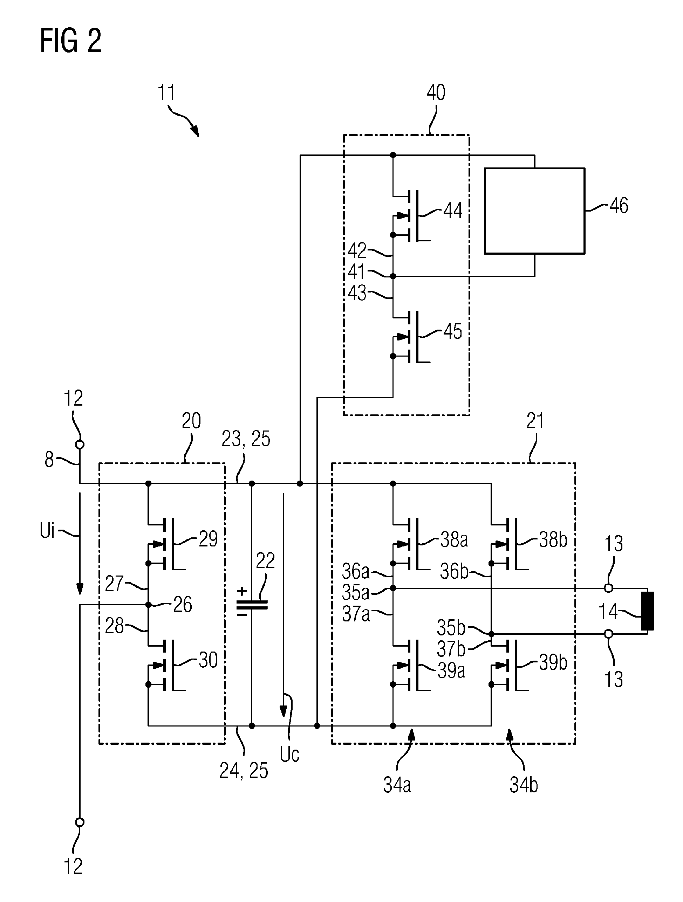

Eines der identisch aufgebauten Submodule 11 ist in FIG 2 näher dargestellt. Wie dieser Darstellung zu entnehmen ist, weist das Submodul 11 eine (Eingangs-)Halbbrücke 20 sowie eine (Ausgangs-)Vollbrücke 21 auf. Das Submodul 11 umfasst des Weiteren einen Zwischenkreiskondensator 22, über dem eine Kondensatorspannung Uc abfällt. Die Halbbrücke 20, die Vollbrücke 21 und der Zwischenkreiskondensator 22 sind hierbei parallel zueinander zwischen eine Plus-Schiene 23 und eine Minus-Schiene 24 eines Zwischenkreises 25 geschaltet.

Die Halbbrücke 20 weist zwei durch einen Mittelabgriff 26 getrennte Zweige 27 und 28 auf, von denen sich der Zweig 27 zwischen dem Mittelabgriff 26 und der Plus-Schiene 23, und der Zweig 28 zwischen dem Mittelabgriff 26 und der Minus-Schiene 24 erstreckt. In jedem der Zweige 27,28 ist je ein (Halbleiter-)Schalter 29 bzw. 30 angeordnet, der jeweils durch einen MOSFET gebildet ist. Über den Schalter 29 ist die Halbbrücke 20 in den Batteriestromkreis 8 geschaltet. Die Eingangsklemmen 12 des Submoduls 11 sind somit beidseitig des Schalters 29 mit der Plus-Schiene 23 bzw. mit dem Mittelabgriff 26 verschaltet.

Die Vollbrücke 21 ist gebildet aus zwei parallel geschalteten (Ausgangs-)Halbbrücken 34a und 34b. Jede der beiden Halbbrücken 34a,34b ist wiederum gebildet aus jeweils zwei durch einen Mittelabgriff 35a bzw. 35b getrennten Zweigen 36a bzw. 36b und 37a bzw. 37b, wobei sich die Zweige 36a und 36b jeweils zwischen dem zugehörigen Mittelabgriff 35a bzw. 35b und der Plus-Schiene 23 erstrecken, während sich die Zweige 37a und 37b jeweils zwischen dem zugeordneten Mittelabgriff 35a bzw. 35b und der Minus-Schiene 24 erstrecken. In jedem der Zweige 36a und 36b ist jeweils ein (Halbleiter-)Schalter 38a bzw. 38b angeordnet. Ebenso ist in jedem der Zweige 37a und 37b jeweils ein weiterer (Halbleiter-)Schalter 39a bzw. 39b angeordnet. Die Schalter 38a, 38b, 39a, 39b sind wiederum vorzugsweise durch MOSFETs gebildet. Zwischen den Mittelabgriffen 35a und 35b der Halbbrücken 34a, 34b ist über die Ausgangsklemmen 13 die zugeordnete Motorphase 14 verschaltet.

Abweichend von den Submodulen eines gewöhnlichen MHF-Umrichters ist in den Zwischenkreis 25, und somit also parallel zu der Halbbrücke 20, die Vollbrücke 21 und dem Zwischenkreiskondensator 22 ein weiterer Stromrichter in Form einer Halbbrücke 40 geschaltet, der wiederum zwei durch einen Mittelabgriff 41 getrennte Zweige 42 und 43, und in jedem Zweig 42, 43 jeweils einen (Halbleiter-)Schalter 44 bzw. 45 in Form eines MOSFET aufweist. Parallel zu dem Zweig 42 und dem darin angeordneten Schalter 44 ist ein Energiespeicher 46 geschaltet, der eine zusätzlich zu der Batterie 5 und den Zwischenkreiskondensatoren 22 vorhandene weitere Leistungsquelle darstellt. Der Energiespeicher 46 ist im Wesentlichen aus einem oder mehreren Doppelschichtkondensatoren (Supercaps), insbesondere in Reihenschaltung, gebildet. Der Energiespeicher 46 umfasst ferner (nicht explizit dargestellte) Schaltungselemente zur Spannungsglättung, insbesondere eine Kapazität und eine Induktivität, wobei diese Elemente auch durch die elektrischen Zuleitungen selbst gebildet sein können.

Die Halbbrücke 40 und der Energiespeicher 46 sind vorzugsweise zusammen mit der Halbbrücke 20, dem Zwischenkreiskondensator 22 und der Vollbrücke 21 zu einer gemeinsamen, fest zusammenhängenden Baueinheit integriert. Grundsätzlich ist aber auch möglich, dass der Energiespeicher 46 (mit oder ohne Halbbrücke 40) in einer von der Halbbrücke 20, dem Zwischenkreiskondensator 22 und der Vollbrücke 21 losgelösten Einheit angeordnet ist.

Im Betrieb der Stromrichterschaltung 4 wird die Halbbrücke 40 in Zusammenwirkung mit der Induktivität des Energiespeichers 46 als Zwei-Quadranten-Steller betrieben. Durch entsprechende Ansteuerung der Schalter 44 und 45 kann somit sowohl ein auf den Energiespeicher 46 fließender Ladestrom als auch ein von dem Energiespeicher 46 abfließender Entladestrom erzeugt werden. Somit kann je nach Bedarf elektrische Energie in dem Energiespeicher 46 zwischengespeichert und wieder abgerufen werden.

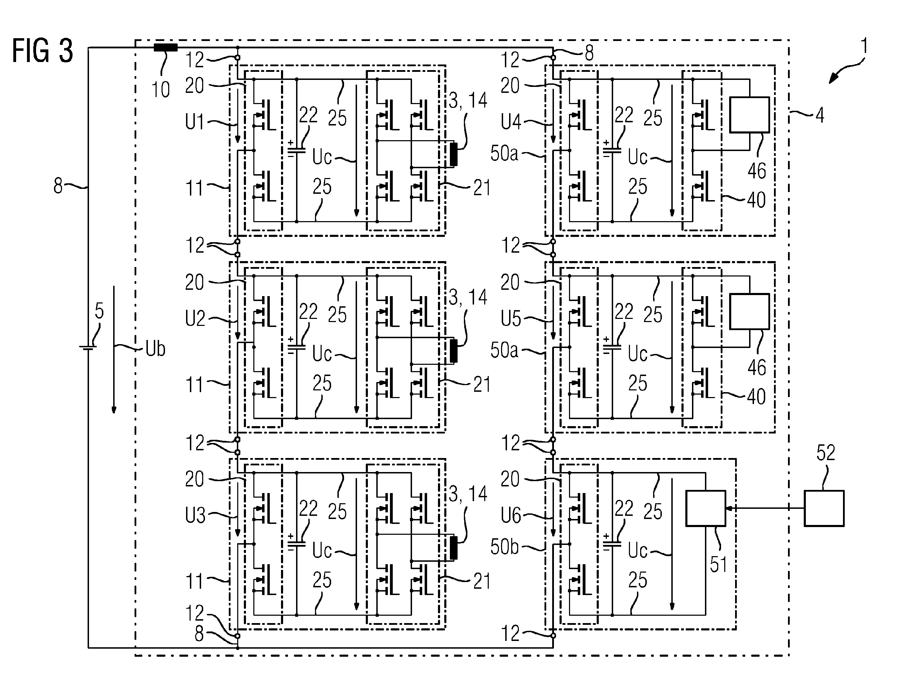

FIG 3 zeigt eine alternative Ausführungsform des Fahrzeugantriebs 1. In dieser Ausführung umfasst die Stromrichterschaltung 4 eine Reihenschaltung von drei herkömmlichen Submodulen 11, in deren Zwischenkreis 25 lediglich die Eingangshalbbrücke 20, der Zwischenkreiskondensator 22 und die Ausgangsvollbrücke 21 geschaltet sind, denen also die weitere Halbbrücke 40 und der Energiespeicher 46 des Submoduls 11 gemäß FIG 2 nicht zugeordnet ist.

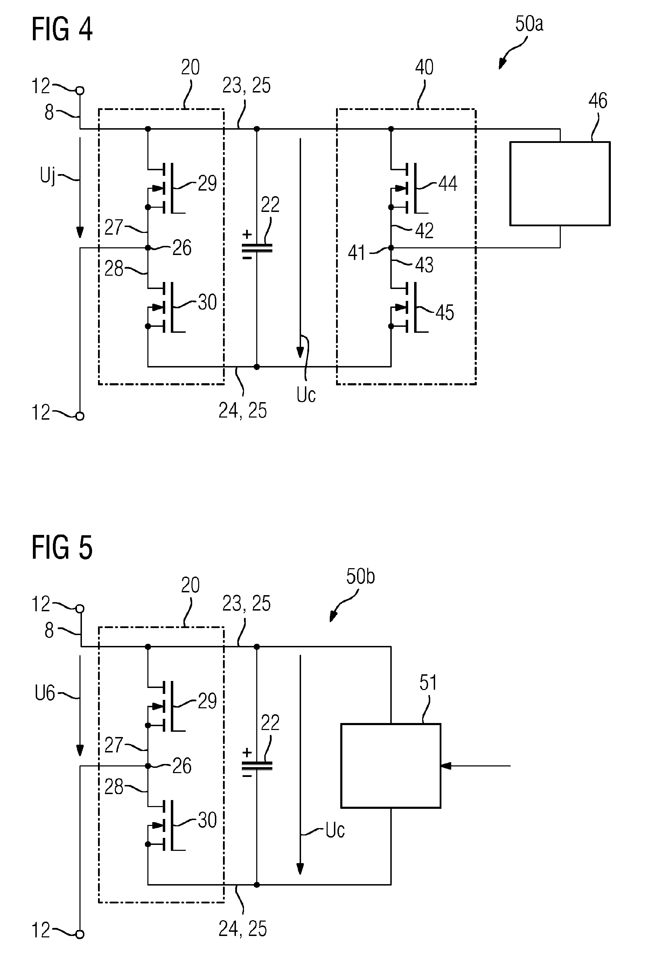

In Parallelschaltung zu den in Reihe geschalteten Submodulen 11 umfasst die Stromrichterschaltung 4 in der Ausführung gemäß FIG 3 einen separaten Versorgungszweig mit zwei gleichartigen Versorgungsmodulen 50a sowie einem davon verschiedenen Versorgungsmodul 50b, wobei die Versorgungsmodule 50a und das Versorgungsmodul 50b zueinander wiederum in Reihe geschaltet sind. Eines der Versorgungsmodule 50a ist hierbei in FIG 4 vergrößert dargestellt. Eine vergrößerte Darstellung des Versorgungsmoduls 50b findet sich in FIG 5.

Die Versorgungsmodule 50a und das Versorgungsmodul 50b sind grundsätzlich ähnlich aufgebaut wie die Submodule 11. Insbesondere weist jedes Versorgungsmodul 50a, 50b - analog zu den Submodulen 11 - die Eingangshalbbrücke 20 auf, über deren Schalter 29 das jeweilige Submodul 50a, 50b mittels der Eingangsklemmen 12 in den Batteriestromkreis 8 geschaltet ist. Zwischen den Eingangsklemmen 12, und somit über dem Schalter 29 eines jeden Versorgungsmoduls 50a fällt dabei einen Teilspannung Uj (mit j=4,5) ab. Zwischen den Eingangsklemmen 12 des Versorgungsmoduls 50b fällt eine Teilspannung U6 ab.

Analog zu den Submodulen 11 umfasst jedes der Versorgungsmodule 50a und 50b auch den Zwischenkreiskondensator 22, der der Halbbrücke 20 über den Zwischenkreis 25 parallel geschaltet ist. Allerdings fehlt bei den Versorgungsmodulen 50a und 50b der bei den Submodulen 11 durch die Vollbrücke 21 gebildete Lastanschluss.

Stattdessen ist bei den Versorgungsmodulen 50a die weitere Halbbrücke 40 vorgesehen, der - wie im Zusammenhang mit FIG 2 beschrieben - der insbesondere aus einem oder mehreren Doppelschichtkondensatoren gebildete Energiespeicher 46 nachgeschaltet ist. Die Versorgungsmodule 50a dienen somit ausschließlich zur Zwischenspeicherung von elektrischer Energie.

Das Versorgungsmodul 50b weist anstelle der Vollbrücke 21 einen weiteren Stromrichter 51 auf, an den - wiederum zusätzlich zu der Batterie 5 und den Zwischenkreiskondensatoren 22 - eine externe Leistungsquelle 52 (FIG 3) angeschlossen ist. Bei dieser extern gespeisten Leistungsquelle 52 handelt es sich insbesondere um eine fahrzeuginterne Photovoltaik-Einheit oder eine fahrzeuginterne Brennstoffzelle. Alternativ kann als Leistungsquelle 52 auch ein Netzteil zum Anschluss an ein fahrzeugexternes elektrisches Versorgungsnetz (Stromnetz) vorgesehen sein. Wiederum alternativ hierzu kann das Versorgungsmodul 50b auch zum direkten Anschluss des Stromrichters 51 an ein Versorgungsnetz ausgebildet sein. Die Art, Phasenanzahl und Funktionsweise des Stromrichters 51 variiert hierbei je nach der von der externen Leistungsquelle 52 gelieferten Stromart. So ist der Stromrichter 51 in einer für den Anschluss einer Photovoltaik-Einheit oder Brennstoffzelle geeigneten Ausführungsform als Gleichspannungsumrichter ausgebildet. In einer zum direkten Anschluss an ein Stromnetz geeigneten Ausführungsform ist der Stromrichter 51 dagegen durch einen gesteuerten, dreiphasigen Gleichrichter gebildet.

Das Versorgungsmodul 50b dient ausschließlich zum Einspeisen von externer elektrischer Energie in den Batteriestromkreis 8 und somit insbesondere zum Laden der Fahrzeugbatterie 5.

Abweichend von der in FIG 3 dargestellten Ausführung kann die Stromrichterschaltung 4 beliebig viele Versorgungsmodule 50a und 50b enthalten. Insbesondere können auch mehrere (gleich-oder verschiedenartige) Versorgungsmodule 50b im Rahmen der Stromrichterschaltung 4 vorhanden sein.

Der Gegenstand der Erfindung ist nicht auf die vorstehend beschriebenen Ausführungsbeispiele beschränkt. Vielmehr können weitere Ausführungsformen der Erfindung von dem Fachmann aus der vorstehenden Beschreibung abgeleitet werden. Insbesondere können die anhand der verschiedenen Ausführungsbeispiele beschriebenen Einzelmerkmale der Erfindung und deren Ausgestaltungsvarianten auch in anderer Weise miteinander kombiniert werden.

## Patentansprüche

1. Stromrichterschaltung (4), umfassend wenigstens zwei Submodule (11) in Reihenschaltung, die über eine Induktivität (10) elektrische Leistung aus einer eine Gleichspannung (Ub) abgebenden Leistungsquelle (5) bezieht,
- wobei jedes Submodul (11) eingangsseitig eine einphasige Halbbrücke (20) und lastseitig eine einphasige Vollbrücke (21) aufweist, und
- wobei die Halbbrücke (20) und die Vollbrücke (21) gleichspannungsseitig zusammen mit einem Zwischenkreiskondensator (22) parallel zueinander in einen Zwischenkreis (25) geschaltet sind,
**gekennzeichnet durch** mindestens ein zusätzliches Versorgungsmodul (50a,50b) zur Speicherung oder Zuführung von elektrischer Energie, das eingangsseitig eine einphasige Halbbrücke (20) aufweist, der gleichspannungsseitig über einen Zwischenkreis (25) ein Zwischenkreiskondensator (22) sowie ein weiterer Stromrichter (40,51) parallelgeschaltet sind, wobei an den weiteren Stromrichter (40,51) eine zusätzliche elektrische Leistungsquelle (46,52) angeschlossen oder anschließbar ist.

2. Stromrichterschaltung (4), umfassend wenigstens zwei Submodule (11) in Reihenschaltung, die über eine Induktivität (10) elektrische Leistung aus einer eine Gleichspannung (Ub) abgebenden Leistungsquelle (5) bezieht,
- wobei jedes Submodul (11) eingangsseitig eine einphasige Halbbrücke (20) und lastseitig eine einphasige Vollbrücke (21) aufweist, und
- wobei die Halbbrücke (20) und die Vollbrücke (21) gleichspannungsseitig zusammen mit einem Zwischenkreiskondensator (22) parallel zueinander in einen Zwischenkreis (25) geschaltet sind,
**dadurch gekennzeichnet, dass** mindestens eines der Submodule (11) einen weiteren Stromrichter (40) aufweist, der parallel zu der Vollbrücke (21) in den Zwischenkreis (25) geschaltet ist, und an den eine zusätzliche elektrische Leistungsquelle (46) angeschlossen oder anschließbar ist.

3. Stromrichterschaltung (4) gemäß Anspruch 1 oder 2, **dadurch gekennzeichnet , dass** die zusätzliche Leistungsquelle ein elektrischer Energiespeicher (46), insbesondere mindestens ein Doppelschichtkondensator oder eine Zusatzbatterie ist.

4. Stromrichterschaltung (4) nach Anspruch 3, **dadurch gekennzeichnet, dass** der weitere Stromrichter durch eine Halbbrücke (40) gebildet ist.

5. Stromrichterschaltung (4) nach Anspruch 1 oder 2, **dadurch gekennzeichnet , dass** die zusätzliche Leistungsquelle eine extern gespeiste Leistungsquelle (52), insbesondere ein eine Photovoltaik-Einheit, eine Brennstoffzelle, ein Generator, ein elektrisches Versorgungsnetz oder ein daran angeschlossenes Netzteil ist.

6. Stromrichterschaltung (4) nach einem der Ansprüche 1 bis 5, **dadurch gekennzeichnet , dass** die zusätzliche Leistungsquelle (46,52) in dem Versorgungsmodul (50a,50b) integriert ist.

7. Fahrzeugantrieb (1) mit mindestens einem Elektromotor (3) zum Antrieb mindestens eines Fahrzeug-Rades sowie mit der Stromrichterschaltung (4) gemäß einem der Ansprüche 1 bis 6, wobei die Submodule (11) lastseitig mit dem mindestens einen Elektromotor (3) verschaltet sind.
